(19)

Europäisches Patentamt
European Patent Office
Office européen des brevets

(11) **EP 3 995 459 A1**

(12) **EUROPEAN PATENT APPLICATION**

(43) Date of publication:
**11.05.2022 Bulletin 2022/19**

(21) Application number: **20205921.8**

(22) Date of filing: **05.11.2020**

(51) International Patent Classification (IPC):
***C02F 1/469*** (2006.01)

(52) Cooperative Patent Classification (CPC):
**C02F 1/4695;** C02F 2201/4612; C02F 2201/4614;
C02F 2209/006; C02F 2209/05

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Voltea**
**Dallas, TX 75234 (US)**

(72) Inventor: **The designation of the inventor has not
yet been filed**

(74) Representative: **Stolmár & Partner
Patentanwälte PartG mbB
Blumenstraße 17
80331 München (DE)**

(54) **ION-SELECTIVE MEMBRANE-CAPACITIVE DEIONIZATION SYSTEM WITH DYNAMIC
MANAGEMENT OF WATER QUALITY**

(57) Disclosed is a method for partially deionizing a feed liquid comprising the steps of: applying an electrical current to at least two electrodes separated by a gap through which feed liquid may flow; allowing the feed liquid to flow through the gap during a duration of time; measuring an electrical conductivity of the liquid; calculating a difference between an target ion removal rate and an actual ion removal rate based on the measured electrical conductivity of the liquid; defining a new electrical current to be applied to the at least two electrodes during a subsequent duration of time; wherein the electrical current applied via the power source to the at least two electrodes is kept constant during the subsequent duration of time.

Fig. 1

EP 3 995 459 A1

**Description**

INTRODUCTION

The disclosure relates to a device and a method for partially deionizing a feed liquid in which an electrolyte is dissolved.

EP 2 571 817 B1 discloses an apparatus and a method for removal of ions from water. The apparatus is provided with a housing comprising a water inlet for letting water into the housing, a water outlet for letting water out of the housing, a first and a second electrode connected to a power supply for creating an electrical current between the first and the second electrode. The apparatus is provided with a spacer between the first and second electrode for allowing water to flow in between the first and second electrode, the spacer comprising a pillar structure.

EP 1 838 900 A2 discloses an electrical system of an electrochemical purification apparatus. The system includes a plurality of electrodes for deionizing fluids passing through the electrodes, a power supply connected to the electrodes, the power supply providing power to the electrodes while maintaining a predetermined current, a predetermined voltage, or a power within some range, a programmable logic controller, connected to the power supply, for controlling the power supply, and a monitoring device connected to the programmable logic controller for delivering data regarding the system to the programmable logic controller.

CN 110745912 discloses a parallel membrane capacitor deionization system, which comprises a water inlet system, a battery, a membrane capacitor deionization component, and a DC-DC converter, a control module, a membrane capacitor deionization module. The DC-DC converter is connected in series through circuit, a flow meter is arranged on the water inlet pipe of the membrane capacitor deionization assembly, and a diaphragm valve is arranged on the water outlet pipe of the membrane capacitor deionization assembly. The water inlet pipes of several membrane capacitor deionization assemblies are connected in parallel in front of the flowmeter and are connected with a water inlet main pipe. The water inlet pipes of several membrane capacitor deionization assemblies are connected in parallel behind the diaphragm valve and are connected with a water outlet main pipe, and the water inlet system is connected with the water inlet main pipe.

The membrane capacitor deionization assembly and the DC-DC converter are connected to the control module signal. The invention also provides a control method of the parallel membrane capacitor deionization system, which can enable the parallel plurality of membrane capacitor deionization components to achieve balanced desalting efficiency.

SUMMARY

An object of the invention is to improve the reliability of a deionization process. A further object is to improve the user friendliness of a deionization device. Another object is to increase the stability of the deionization control method.

These objects are achieved by a device and a method according to the independent claims. The independent claims and the sub claims can be combined in any technologically suitable and sensible way, providing further embodiments of the disclosure. The description, particularly in relation to the figures, provide further details characterizing the invention.

Disclosed is a method for partially deionizing a feed liquid comprising the steps of:

i. applying an electrical current to at least two electrodes separated by a gap through which feed liquid may flow;

ii. allowing the feed liquid to flow through the gap during a duration of time;

iii. measuring an electrical conductivity of the liquid;

iv. calculating a difference between an ion removal target rate and an actual ion removal rate based on the measured electrical conductivity of the liquid;

v. defining a new electrical current to be applied to the at least two electrodes during a subsequent duration of time; wherein

vi. the electrical current applied via the power source to the at least two electrodes is kept constant during the subsequent duration of time.

The reliability of the deionization process is improved by keeping the electrical potential constant for a certain duration. This duration can last throughout an entire purification cycle.

The flow rate of liquid passing through the membrane-capacitive deionization system is kept constant. Hence the system only reacts towards changes in the ionization of the liquid.

Therefore, according to an embodiment of the present disclosure, the duration of time lasts as long as a purification time phase, during which deionized liquid is discharged out of the gap. In other words, the electrical potential is only amended intermittently after a purification phase and in particular after reviewing the success rate of deionization.

The electrical current supplied by the power source is not changed during a purification cycle. That does not mean the potential measured between the electrodes is constant as well. Due to the deionization, the electrical conductivity of the liquid in the gap decreases whilst ions gather on the electrodes, essentially clogging them up and blocking free movement of electrical current. Hence the potential between the electrodes changes over time. Hence the only thing that is provably constant are the voltage and/or current deliverable to the electrodes by the power source.

According to an embodiment of the present disclosure, the duration of time lasts as long as a waste time phase, during which liquid loaded with ions is discharged out of the gap. During the waste phase, the current supplied to the electrodes is inverted by inverting the polarity. Ions removed from the liquid are removed out of the membrane-capacitive deionization filters in the waste phase. It has been found that it is also advantageous to keep the current in the waste phase constant. A purification cycle encompasses a purification phase and a waste phase.

Throughout the present disclosure, reference is made to previous, present and subsequent purification phases, waste phases and purification cycles. A previous purification phase, waste phases and purification cycle took place before the present purification and waste phases and purification cycles. A subsequent purification phase, waste phases and purification cycle will take place after the present purification phase, waste phases and purification cycle.

According to an embodiment of the present disclosure, the ion removal target rate is based on an adjustable removal rate of ions that can be set via an interface.

The adjustable removal rate can be expressed in percent. The adjustable removal rate in percent can be entered into an interface depending on the potential of the membrane-capacitive deionization system, the desired quality of outlet liquid and other factors. If the removal rate is expressed in percent, the current supplied to the electrodes will be regulated according to the method to meet the set removal rate at least in a subsequent cycle.

According to an embodiment of the present disclosure, the ion removal target rate is based on a conductivity output value that can be set via an interface.

This is not necessarily an alternative to the removal rate in percent. A combination of a removal rate leading to a percentage of removal and a removal rate wherein the conductivity of output liquid is controlled is possible. For instance, there can be operational situations of the membrane-capacitive deionization system in which the removal rate in percent is satisfied, whilst the removal rate based on a conductivity output has not been met. This operational situation may occur if the ionization of liquid entering the membrane-capacitive deionization system is relatively high.

According to an embodiment of the present disclosure, for the calculation of the subsequent electrical current in a purification phase, a previous removal rate calculated during a previous purification phase is taken into account using the following formula: [[(target ion removal rate) - (ion removal rate of current purification phase)]*P] + (current of previous purification phase) = (subsequent electrical current).

This formula may be used to define the subsequent electrical current in claim 1. The formula takes into account a factor P representing the weight with which the difference between the target ion removal rate and the ion removal rate of current purification phase goes into the equation. The factor P is selected by the manufacturer and external controller of the membrane deionization unit based on properties of the device and liquid to be purified and according to requirements of the user.

According to an embodiment of the present disclosure, the above mentioned factor P is a speed value factor in the range between 0,3 to 2, preferably 0,5 to 1,5, in particular 0,8 to 1,2.

Hence in large parts P can be below 1, thus damping the effect of a difference between the target ion removal rate and the ion removal rate of current purification phase. If P is above zero, the weight of the difference between the target ion removal rate and the ion removal rate of current purification phase is emphasized and thus a difference would lead to a more robust response of the system.

According to an embodiment of the present disclosure, for the calculation of the subsequent electrical current in a waste phase, a previous ion removal rate calculated during a previous waste phase is taken into account using the following formula: [(duration of a current purification phase) + (duration of a previous purification phase)] / (duration of a waste phase)] * W * subsequent electrical current = subsequent electrical current during subsequent waste phase.

Thus the waste current is also calculated and balanced according to previous events. In some embodiments, the duration of a purification phase and the duration of a waste phase are predefined by the manufacturer of the membrane-capacitive deionization system or external controller of the membrane-capacitive deionization system. The durations of the waste and purification phases would not typically be set by the user of the membrane-capacitive deionization system.

According to an embodiment of the present disclosure, the above mentioned factor W is a bonus factor in the range between 1 to 1,2; preferably 1,02 to 1,15; in particular 1,03 to 1,12.

The factor W can be adapted according to the properties of the membrane-capacitive deionization system. The subsequent electrical current during subsequent waste phase is selected high enough to remove ions and polar material during the waste phase. The factor W is typically larger than 1, so that there is an enlargement of the weight of which the [(duration of a current purification phase) + (duration of a previous purification phase)] / (duration of a waste phase)] goes into the equation, leading to an increased current for discharging ions and polar material. The factor W is selected by the manufacturer and external controller of the membrane deionization unit based on properties of the device and liquid to be purified and according to requirements of the user.

According to an embodiment of the present disclosure, the electrical current remains as it is if a difference between the target removal rate and the actual removal rate is below a threshold, wherein the threshold is preferably 0,5 A.

In other words, a threshold has to be crossed for the system to adapt the current to changes in the ionization of the liquid. If the change in the ionization of the liquid is marginal, it has been found that it is better not to react until the change is more substantial.

According to an embodiment of the present disclosure, the electrical current in the liquid is measured downstream of the electrodes after liquid has been discharged out of the gap.

The conductivity of the liquid is measured downstream of the electrodes so that the current can be measured throughout the deionization process without the influence of the current induced by the electrodes. Measuring downstream of the electrodes of capacitors provides for a more representative value of the conductivity. For devices comprising several capacitors in parallel and in series, a downstream sensor is arranged downstream of all the capacitors.

According to an embodiment of the present disclosure, the purification time phase has a duration of 30 seconds to 300 seconds, preferably 100 seconds to 180 seconds, in particular 110 seconds to 130 seconds.

As indicated above, the durations of the purification phase is usually predefined and not set by the user. A purification phases lasts until the electrodes are shielded by ions and become less effective. The purification time durations cited above apply to membrane-capacitive deionization systems that would be required for deionizing approximately 20 l/min to 50 l/min, preferably 30l/min to 40 l/min of liquid.

According to an embodiment of the present disclosure, the waste time phase has a duration of 40 seconds to 200 seconds, preferably 50 seconds to 150 seconds, in particular 70 seconds to 90 seconds.

The waste time durations cited above apply to membrane-capacitive deionization systems that would be required for deionizing approximately 20 l/min to 50 l/min, preferably 30l/min to 40 l/min of liquid.

According to an embodiment of the present disclosure, a resulting electrical current supplied by the power source or resulting from the ionized fluid is 100 A to 300 A, preferably 150 A to 250 A, in particular 200 A to 220 A.

In larger applications, the purification phase, the waste phase, resulting electrical current, etc. are scaled up according to their flow rate. The disclosed time ranges, amperes and flow rates are only indicated to provide a relation between the amperes, durations of purification phases, waste phases and flow rates.

The amperes correlate directly to the amount of ions removed. This is why it is easier to define the current applied to the electrodes rather than the voltage, because the voltage changes without a direct indication of a success of deionization.

According to an embodiment of the present disclosure, the method steps can be implemented in a computer program product comprising program code means stored on a computer-readable data carrier for performing the method.

This computer program product can be stored on a control unit controlling the membrane-capacitive deionization system.

The control unit may include a microprocessor or central processing unit (CPU) in communication with various types of computer readable storage devices or media. Computer readable storage devices or media may include volatile and nonvolatile storage in read-only memory (ROM), random-access memory (RAM), and keep-alive memory (KAM), for example. KAM is a persistent or non-volatile memory that may be used to store various operating variables while the CPU is powered down. Computer-readable storage devices or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable instructions, used by the control unit in controlling the membrane-capacitive deionization system.

BRIEF DESCRIPTION OF THE DRAWINGS

To describe the technical solutions in the embodiments of this application more clearly, the following briefly introduces the accompanying drawings required for describing the embodiments or the prior art. Apparently, the accompanying drawings in the following description show merely some embodiments of this application, and a person of ordinary skill in the art may still derive other drawings from these accompanying drawings without creative efforts.

FIG. 1 is a schematic block diagram of a membrane-capacitive deionization system;

FIG. 2 is two graphs representing the voltage and current during several cycles of deionization; and

FIG. 3 is a schematic flow chart taking place in a control unit controlling the membrane-capacitive deionization system.

DETAILED DESCRIPTION

The technical solutions of the embodiments of this application will be described in the following with reference to the accompanying drawings. It is obvious that the embodiments to be described are a part rather than all of the embodiments of this application. All other embodiments obtained by persons of ordinary skill in the art based on the embodiments of the present invention without making creative efforts shall fall within the protection scope of the present invention.

The term "liquid" refers to an aqueous solution for treatment in a system of the invention. Often, liquid will be water based, since water treatment is a pressing industrial and environmental issue. However, as will be clear from the description, the disclosure permits treatment of non-aqueous liquids containing ions or polar materials. The term "materials" refers generally to matter in the fluid that can be removed by electrodes. Such materials include ions, ionizable compounds, polar or polarizable compounds, and microorganisms.

The term "electrical current" refers to the electrical current that is deliverable to the electrodes at a certain voltage, i.e. an electrical potential difference. The deliverable current may not necessarily flow, for instance when the gap between the electrodes is empty or when liquid is deionized.

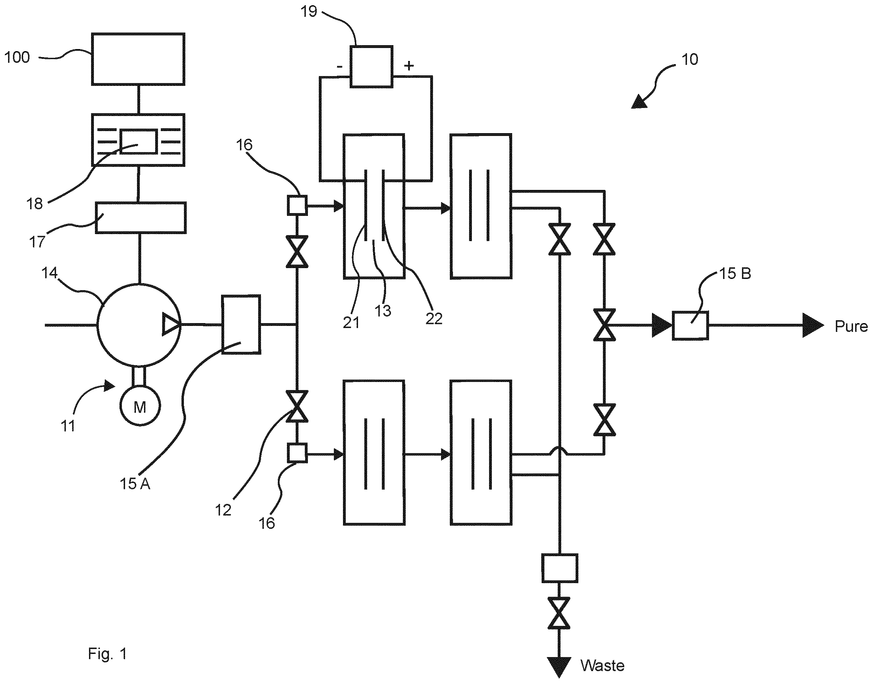

Figure 1 shows a membrane-capacitive deionization device 10, comprising two current measurement devices 15A, 15B and a flow controller 11. The current measurement device 15A measures the current in liquid flowing in to gaps 13 between first electrodes 21 and second electrodes 22. The current measurement device 15B measures the current in liquid flowing out of a gaps 13 between a first electrodes 21 and a second electrodes 22. The ion flux is a function of the electrical current and the electrical current may thus be used as a measure for the ion flux. The current measurement devices 15A and 15B provides a current signal to the flow controller 11, which may adjust the water flow depending on the measured electrical current. The flow controller 11 may be arranged for adjusting the flow velocity of the water, for example by controlling a pump 14 and valves 12, via a control signal. The flow of liquid through the membrane-capacitive deionization device 10 is further limited or controlled via restrictors 16. The membrane-capacitive deionization device 10 comprises a control unit 17 having a digital communication interface 18 for entering values and for monitoring the deionization process in the membrane-capacitive deionization device 10.

The membrane-capacitive deionization device 10 can further comprise a digital communication device 100, such as a modem, for communicating with the system remotely. The control unit 17 can be controlled through the digital communication interface 100 to be reprogrammed to adjust the control of the components or to remotely extract status information of the system. For example, the control unit 17 can be remotely programmed by, for example, downloading programs and changing any set parameters used in the programs, such as current or voltage levels. The purification steps can be changed by reprogramming the control unit. In another example, the external controller can be called up through the digital communication device 100 to find out how much liquid the apparatus has treated and to have the functions reviewed by an expert who is not necessarily located in the vicinity.

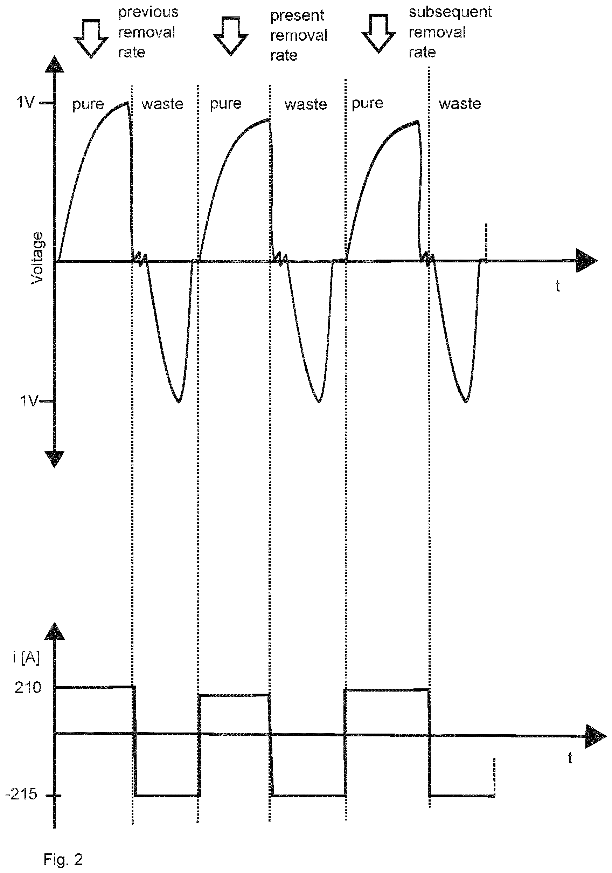

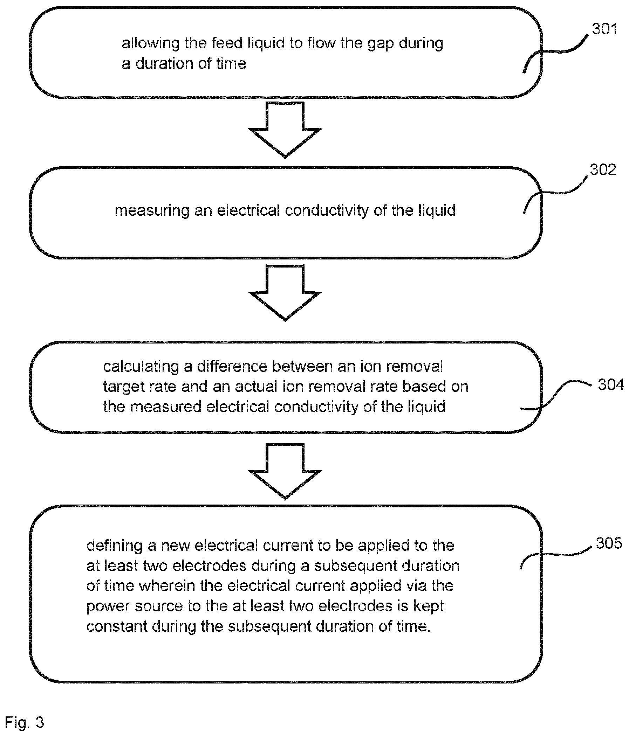

Figure 3 discloses a method for partially deionizing a feed liquid. The method may be implemented on the membrane-capacitive deionization device 10 according to figure 1, hence reference shall be made to figures 1 and 2 in the following description of the method.

Step 301 involves applying an electrical current to at least two electrodes 21, 22 separated by a gap 13 through which feed liquid may flow. Step 301 is essentially carried out in that the control unit 17 commands the power source 19 to deliver a certain current at a certain voltage to the electrodes 21, 22, producing a certain electrical current between the electrodes 21, 22. Step 301 begins according to a previous, present and subsequent removal rate during a pure phase (see figure 2).

Step 302 includes allowing the feed liquid to flow through the gap 13 during a duration of time during a pure phase. Step 302 can be carried out simultaneously to Step 301. Steps 301 and 302 can commence during a phase in which liquid is still discarded to waste just to make sure that the first liquid used in the purification phase (pure in figure 2) is liquid that has passed the electrodes with the polarity corresponding to a purification setting.

The feed liquid comprises ions that can be removed using the membrane-capacitive deionization device 10. The feed liquid can be put under fluid pressure using the pump 14. Downstream of the pump the conductivity of the liquid is measured in an inlet conductivity sensor 15A. Valves 12 and restrictors 16 then control the flow of liquid through several membrane-capacitive deionization filters, each comprising electrodes such as the electrodes 21, 22 in the top left in figure 1. The inlet conductivity sensor 15A, the valves 12 and possibly also the restrictors 16 are connected to the control unit 17 in order to allow the control unit 17 to receive information from the inlet conductivity sensor 15A, the valves 12 and possibly also the restrictors 16 and to control them.

Step 303 entails measuring an electrical conductivity of the liquid. This typically occurs downstream of the membrane-capacitive deionization filters in an outlet conductivity sensor 15B.

Step 304 involves calculating a difference between a target ion removal rate and an actual ion removal rate based on the measured electrical conductivity of the liquid. The voltage and current are thus adapted for a subsequent purification phase (pure in figure 2) corresponding to a subsequent removal rate. A previous removal rate was at one point the present removal rate, a subsequent removal rate has not happened yet so the graphs in figure 2 are actually a prediction of what will be based on previous events. In simple embodiments, the actual ion removal rate is detected by measuring the electrical conductivity using the conductivity sensor 15B. In some embodiments the actual removal rate is assessed by measuring liquid entering the membrane-capacitive deionization and liquid exiting the membrane-capacitive deionization filters.

Step 305 entails defining a new electrical current to be applied to the at least two electrodes during a subsequent duration of time. The electrical current and/or the voltage required to produce the current applied via the power source to the at least two electrodes is kept constant during the subsequent duration of time.

This is visualized in Figure 2, wherein the bottom graph shows the current delivered to electrodes by the power source. As can be seen, the current delivered during a waste phase is inverted with relation to the current delivered during a pure phase. Also, the current delivered in a previous, present or subsequent waste phase is a little higher than the current delivered during a purification phase. Moreover, when the voltage is lower as per the requirements, the current is lower too. This is the case during the present purification and the subsequent purification.

In an embodiment, the duration of time lasts as long as a purification time phase, during which deionized liquid is discharged out of the gap. In the above graph in Figure 2, the voltage applied varies over time. If a current is applied in a time period such that the present purification time has led to a sufficient removal of ions, the current applied in the subsequent purification phase will be the same.

In an embodiment, the duration of time lasts throughout a waste time phase (waste in figure 2), during which liquid loaded with ions is discharged out of the gap. In other words, the current in a waste phase is also kept constant as depicted in the below graph in figure 2.

In an embodiment, the target ion removal rate is based on an adjustable removal rate of ions that can be set via the interface 18 which controls the control unit 17.

The control unit 17 can comprise a printed circuit board (PCB) for controlling the power source 19. The interface can comprise a screen for setting the removal target rate. The target ion removal rate can be based on a conductivity output value that can be set via an interface. In other words, the user can input a conductivity into the interface 18 that liquid exiting the membrane-capacitive deionization system should have. The conductivity corresponds to the amount of ions in the liquid.

The control unit 17 uses signals generated by conductivity sensors 15A and 15B and previous events for the calculation of a subsequent current. For the calculation of the subsequent electrical current in a purification phase, a previous removal rate calculated during a previous purification phase is taken into account using the following formula:

$$[[(\text{target ion removal rate}) - (\text{ion removal rate of current purification phase})]*P] + (\text{current of previous purification phase}) = (\text{subsequent electrical current}).$$

In this formula, the factor P is a speed value factor in the range between 0,3 to 2, preferably 0,7 to 1,5, in particular 0,8 to 1,2. P weakens the weight with which the difference between the target ion removal rate and the ion removal rate of current purification phase goes into the equation if it is below 1. P increases the weight with which the difference between the target ion removal rate and the ion removal rate of current purification phase goes into the equation if it is above 1. The factor P is selected by the manufacturer and external controller of the membrane deionization unit based on properties of the device and liquid to be purified and according to requirements of the user.

Likewise, for the calculation of the subsequent electrical current in a waste phase, the control unit 17 takes into account a previous ion removal rate calculated during a previous waste phase is taken into account using the following formula:

$$[(\text{duration of a current purification phase}) + (\text{duration of a previous purification phase})] / (\text{duration of a waste phase})] * W * \text{subsequent electrical current} = (\text{subsequent electrical current during subsequent waste phase}).$$

In this formula, the factor W is a bonus factor which lies in the range between 1 to 1,2; preferably 1,02 to 1,15; in particular 1,03 to 1,12. As indicated above, the factor W is mostly higher than 1, so that the influence of the duration of a current purification phase and the duration of a previous purification phase is emphasized. The factor W is higher than 1 because it is important to flush as many agglomerated ions as possible out of the membrane deionization system before a new purification phase. The factor W is essentially responsible for the electrical current being higher during a waste phase than during a purification phase.

In an embodiment, the electrical current remains as it is if a difference between the target removal rate and the actual removal rate is below a threshold, wherein the threshold is preferably 0,5 A. Hence, the system does not respond to minor changes in ionization of the liquid.

Furthermore, the electrical current in the liquid is measured downstream of the electrodes after liquid has been discharged out of the gap 13, so that the current introduced into the liquid by the electrodes 21, 22 is not measured.

A duration of a purification phase and a waste phase would typically be preset by the manufacturer and external controller of the membrane deionization system based on the type of membrane deionization system, liquid to be purified (typically salt water) and the requirements of the user. The purification time phase is typically selected to have a duration of 90 seconds to 300 seconds, preferably 100 seconds to 180 seconds, in particular 110 seconds to 130 seconds.

The waste phase is selected to have a duration of 40 seconds to 200 seconds, preferably 50 seconds to 150 seconds, in particular 70 seconds to 90 seconds. In certain embodiments, the waste liquid discarded during the waste phase can be re-introduced as liquid entering the membrane deionization system.

For devices operating according to the disclosed methods, the maximum resulting electrical current supplied by the power source or resulting from the ionized fluid is in the range from 100 A to 300 A, preferably 150 A to 250 A, in particular 200 A to 220 A.

The control unit 17 can be operated by a computer program product comprising program code means stored on a computer-readable data carrier for performing the methods described herein.

Exemplary embodiments are described above. It is not intended that these embodiments describe all possible forms encompassed by the claims. The words used in the specification are words of description of embodiments rather than limitation. It is understood that various changes can be made without departing from the spirit and scope of the disclosure. As previously described, the features of various embodiments can be combined to form further exemplary aspects of the present disclosure that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, etc. As such, embodiments described as less desirable than other embodiments or prior art implementations with respect to one or more characteristics are not outside the scope of the disclosure and can be desirable for particular applications.

## Claims

1. A method for partially deionizing a feed liquid comprising the steps of:

   i. applying an electrical current to at least two electrodes (21, 22) separated by a gap (13) through which feed liquid may flow;
   ii. allowing the feed liquid to flow through the gap (13) during a duration of time;
   iii. measuring an electrical conductivity of the liquid;
   iv. calculating a difference between an target ion removal rate and an actual ion removal rate based on the measured electrical conductivity of the liquid;
   v. defining a new electrical current to be applied to the at least two electrodes during a subsequent duration of time;
   **characterized in that**
   vi. the electrical current applied via the power source to the at least two electrodes is kept constant during the subsequent duration of time.

2. A method for partially deionizing a feed liquid according to claim 1, **characterized in that** the duration of time lasts as long as a purification time phase, during which deionized liquid is discharged out of the gap (13).

3. A method for partially deionizing a feed liquid according to claim 1, **characterized in that** the duration of time lasts as long as a waste time phase, during which liquid loaded with ions is discharged out of the gap (13).

4. A method for partially deionizing a feed liquid according to at least one of claims 1 to 3, **characterized in that** the target ion removal rate is based on an adjustable removal rate of ions that can be set via an interface (17).

5. A method for partially deionizing a feed liquid according to at least one of claims 1 to 4, **characterized in that** the target ion removal rate is based on a conductivity output value that can be set via an interface (17).

6. A method for partially deionizing a feed liquid according to one or more of the claims 1 to 5, **characterized in that** for the calculation of the subsequent electrical current in a purification phase, a previous removal rate calculated during a previous purification phase is taken into account using the following formula:

$$[[(\text{target ion removal rate}) - (\text{ion removal rate of current purification phase})]*P] +$$

$$(\text{current of previous purification phase}) = (\text{subsequent electrical current}).$$

7. A method for partially deionizing a feed liquid according to claim 6, **characterized in that** P is a speed value factor in the range between 0,3 to 2, preferably 0,5 to 1,5, in particular 0,8 to 1,2.

8. A method for partially deionizing a feed liquid according to one or more of the claims 1 to 7, **characterized in that** for the calculation of the subsequent electrical current in a waste phase, a previous ion removal rate calculated during a previous waste phase is taken into account using the following formula: [(duration of a current purification phase) + (duration of a previous purification phase)] / (duration of a waste phase)] * W * subsequent electrical current = subsequent electrical current during subsequent waste phase.

9. A method for partially deionizing a feed liquid according to claim 8, **characterized in that** W is a bonus factor in the range between 1 to 1,2; preferably 1,02 to 1,15; in particular 1,03 to 1,12.

10. A method for partially deionizing a feed liquid according to one or more of the claims 1 to 9, **characterized in that** the electrical current remains as it is if a difference between the target removal rate and the actual removal rate is below a threshold, wherein the threshold is preferably 0,5 A.

11. A method for partially deionizing a feed liquid according one or more of the claims 1 to 10, **characterized in that** the electrical current in the liquid is measured downstream of the electrodes (21, 22) after liquid has been discharged out of the gap (13).

12. A method for partially deionizing a feed liquid according to one or more of the claims 1 to 11, **characterized in that** the purification time phase has a duration of 30 seconds to 300 seconds, preferably 100 seconds to 180 seconds, in particular 110 seconds to 130 seconds.

13. A method for partially deionizing a feed liquid according to one or more of the claims 1 to 12, **characterized in that** the waste time phase has a duration of 40 seconds to 200 seconds, preferably 50 seconds to 150 seconds, in particular 70 seconds to 90 seconds.

14. A method for partially deionizing a feed liquid according to one or more of the claims 1 to 13, **characterized in that** as an electrical current, the resulting electrical current supplied by the power source or resulting from the ionized fluid is 100 A to 300 A, preferably 150 A to 250 A, in particular 200 A to 220 A.

15. A computer program product comprising program code means stored on a computer-readable data carrier for performing the method according to any one of the foregoing claims 1 to 14 when said program code means is executed on a computer.

Fig. 1

Fig. 2

allowing the feed liquid to flow the gap during a duration of time — 301

measuring an electrical conductivity of the liquid — 302

calculating a difference between an ion removal target rate and an actual ion removal rate based on the measured electrical conductivity of the liquid — 304

defining a new electrical current to be applied to the at least two electrodes during a subsequent duration of time wherein the electrical current applied via the power source to the at least two electrodes is kept constant during the subsequent duration of time. — 305

Fig. 3

Europäisches
Patentamt

European
Patent Office

Office européen
des brevets

# EUROPEAN SEARCH REPORT

Application Number

EP 20 20 5921

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CA 2 228 886 A1 (GLEGG WATER CONDITIONING INC [CA]) 6 August 1999 (1999-08-06) <br> * page 8, line 4 - page 13, line 7 * <br> * page 13, line 25 - page 14, line 15; figure 1 * <br> ----- | 1,2,4-9, 11-15 | INV. C02F1/469 |
| X | US 2005/103644 A1 (WILKINS FREDERICK [US] ET AL) 19 May 2005 (2005-05-19) <br> * paragraphs [0036] - [0074], [0081] - [0091]; figures 1-3 * <br> ----- | 1-15 | |
| A | US 2013/118918 A1 (SERVIDA TULLIO [IT]) 16 May 2013 (2013-05-16) <br> * paragraph [0097] * <br> ----- | 14 | |

**TECHNICAL FIELDS SEARCHED (IPC)**

C02F

The present search report has been drawn up for all claims

| Place of search | Date of completion of the search | Examiner |
|---|---|---|
| The Hague | 16 April 2021 | Wolf, Gundula |

EPO FORM 1503 03.82 (P04C01)

## ANNEX TO THE EUROPEAN SEARCH REPORT
## ON EUROPEAN PATENT APPLICATION NO.

EP 20 20 5921

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2021

| Patent document cited in search report | | | Publication date | Patent family member(s) | | Publication date |
|---|---|---|---|---|---|---|
| CA 2228886 | A1 | | 06-08-1999 | NONE | | |
| US 2005103644 | A1 | | 19-05-2005 | EP | 1704121 A2 | 27-09-2006 |
| | | | | ES | 2525876 T3 | 30-12-2014 |
| | | | | JP | 2007511351 A | 10-05-2007 |
| | | | | TW | 200516054 A | 16-05-2005 |
| | | | | US | 2005103644 A1 | 19-05-2005 |
| | | | | US | 2009236235 A1 | 24-09-2009 |
| | | | | WO | 2005049506 A2 | 02-06-2005 |
| US 2013118918 | A1 | | 16-05-2013 | AU | 2011249544 A1 | 29-11-2012 |
| | | | | EP | 2566819 A1 | 13-03-2013 |
| | | | | IT | 1399940 B1 | 09-05-2013 |
| | | | | US | 2013118918 A1 | 16-05-2013 |
| | | | | WO | 2011138663 A1 | 10-11-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2571817 B1
- EP 1838900 A2
- CN 110745912